# EUROPEAN PATENT SPECIFICATION

(11) **EP 3 960 061 B1**
(45) Date of publication and mention of the grant of the patent: **19.03.2025**
(21) Application number: 20814807.2
(22) Date of filing: 02.04.2020
(51) Int. Cl.: A47L 9/28, A47L 11/40, A47L 11/24

(54) **ROBOT, CONTROL METHOD FOR ROBOT, AND STORAGE MEDIUM**
ROBOTER, STEUERUNGSVERFAHREN FÜR EINEN ROBOTER UND SPEICHERMEDIUM
ROBOT, PROCÉDÉ DE COMMANDE DE ROBOT ET SUPPORT DE DONNÉES

(30) Priority: 27.05.2019 CN 201910448046
(43) Date of publication of application: 02.03.2022
(73) Proprietor: Midea Robozone Technology Co., Ltd., Suzhou, Jiangsu 215100 (CN)
(72) Inventor: GAO, Lei, Suzhou, Jiangsu 215100 (CN); CHEN, Yuan, Suzhou, Jiangsu 215100 (CN); XU, Xiaoming, Suzhou, Jiangsu 215100 (CN); CHEN, Tong, Suzhou, Jiangsu 215100 (CN)
(74) Representative: RGTH
(86) International application number: PCT/CN2020/083039
(87) International publication number: WO 2020/238409

(56) References cited:
- CN-A- 1 895 152
- CN-A- 108 065 863
- CN-A- 108 378 779
- CN-A- 108 378 779
- CN-U- 205 514 412
- CN-Y- 2 693 167
- CN-Y- 2 693 167
- DE-A1- 102004 010 827
- DE-A1- 102012 107 765
- DE-U1- 202005 019 993

## Description

### FIELD

The present invention relates to the technical field of household appliances, specifically, relates to a robot, a control method for robot and a storage medium.

### BACKGROUND

At present, with the gradual improvement of people's life quality, there are more and more types of sweeping robots, and more and more functions. However, as a smart robot for home services, the cleaning effect is the most basic and most concerned function. Due to the different home environment, the ground material is also different, but the sweeping robots move on the ground at the same speed, which will cause uneven ground cleaning effects.
DE 10 2012 107765 A1 discloses that the detection of the respective substrate by the control unit can generally be used to adapt the travel speed of a robot vacuum cleaner to the respective surface, so that in the case of a hard floor as a recognized substrate, the motors of at least two separately controllable wheels are pressurized with an increased set point for an increased travel speed, because with a hard floor as a detected substrate for a satisfactory suction result, a shorter dwell time above a respective section of ground is sufficient and thus a higher driving speed is possible.
DE 10 2004 010827 A1 discloses that if a floor area is cleaned, the motor current and speed values are recorded and compared with the combinations stored in a storage element. The floor surface condition, which corresponds to the stored combination that most closely corresponds to the currently available combination of motor current and speed values, is then output by the floor classification member. This floor surface condition forms the basis for the control of the drive motors, i.e. both the speed of the floor cleaning device and the operating mode of the brush motor and the naturally aspirated motor are adapted to the currently available floor surface condition.
CN 108 378 779 A discloses a cleaning device control method based on ultrasonic waves. The cleaning device control method comprises the following steps: detecting a cleaning target by using an ultrasonic detection module at a cleaning end of a cleaning device, and enabling the ultrasonic detection module to generate ache signals of different ultrasonic waves according to surface roughness of the cleaning target; forming control signals with different speed parameters by a control unit according to different ache signals; enabling the control unit to control a driving part of the cleaning device to operate at different speeds according to different control signals.
DE 20 2005 019993 U1 discloses that in order to optimize the suction properties with the lowest possible energy consumption of the suction cleaning tool, depending on the nature of the floor covering and / or the degree of contamination, a variable power control of the roller drive assigned to the cleaning roller and / or the suction blower and / or the travel drive is preferably provided. By controlling the travel drive, a lower travel speed can be provided on textile floor coverings than on smooth floors. By reducing the driving speed, a more intensive cleaning of the floor covering is possible.

### SUMMARY

It is the object of the present invention to provide an improved cleaning robot and control method therefor.
This object os achieved by the subject-matter of the independent claims.
Embodiments are defined by the dependent claims.

The present invention aims to solve at least one of the technical problems existing in the existing technology or related technologies.

To this end, a first aspect of the present invention provides a robot.

A second aspect of the present invention provides a control method for robot.

A third aspect of the present invention provides a computer-readable storage medium.

In view of this, the first aspect of the present invention provides a robot, including a memory, a processor and a computer program stored on the memory and running on the processor, and when the processor executes the computer program, implementing: obtaining, a material information of a working surface; and determining, a target running speed of the robot according to the material information, and control the robot to run at the target running speed.

The robot provided by the present invention can detect the material information of the working surface, and different materials will have different cleaning difficulties. For example, carpets are more difficult to clean than floors. If they move at the same speed when passing through the carpet and passing the floor, the carpet will not be cleaned properly. However, in the embodiment provided by the present invention, the robot controls the operating speed according to the material information of the working surface, that is, changes the moving speed of the robot according to the different materials, so that the robot can clean at different speeds for different materials when cleaning. If the detected material of the working surface is a material that is not easy to clean, you can set the speed to a low speed mode accordingly, and then when passing through the working surface that is not easy to clean, at the same cleaning frequency, that is, under the condition that the working frequency of the rolling brush remains unchanged, by slowing down the moving speed of the robot, you can clean the working surface that is not easy to clean at one time, thereby improving the cleaning effect of the robot. At the same time, compared with the related technology, in order to clean the carpet that is not easy to clean and let the robot clean the carpet multiple times, by slowly moving at a time to clean the carpet, it can reduce the possibility of collision between the robot and other movable objects, thereby improve the robot cleaning coverage, save user time and improve cleaning efficiency.

According to the above-mentioned robot provided by the present invention, it may also have the following additional technical features.

In the above-mentioned embodiments, furthermore, the step of determining the target running speed of the robot according to the material information which is implemented when the processor executes the computer program, specifically implements: comparing, the material information with a stored material information; and determining, a running speed corresponding to a stored material information matching with the material information is the target running speed.

In this embodiment, the material information of a variety of working surfaces is stored in the robot in advance to form the stored material information, and the running speed corresponding to the stored material information is stored in the robot, that is, the optimal moving speed corresponding to different materials is stored in the robot in advance. After robot detects the material information of the working surface, it compares the detected material information with the stored material information, and uses the running speed corresponding to the stored material information that matches with the material information as the target running speed, and then achieve the technical effect of moving at different speeds according to different materials.

Furthermore, each material corresponds to a running speed.

In any one of the above-mentioned embodiments, furthermore, the step of determining the target running speed of the robot according to the material information is implemented when the processor executes the computer program, specifically implements: confirming, a corresponding material type according to the material information, and the material type comprises an easy-to-clean type and a difficult-to-clean type; determining, the material information is of the easy-to-clean type, and control the robot to run at a first speed; and determining, the material information is of the difficult-to-clean type, and control the robot to run at a second speed, wherein, the first speed is greater than the second speed.

In this embodiment, by storing the variety of materials in the robot in advance, and dividing the variety of material information into different material types according to the difficulty of cleaning, the material types include easy-to-clean type and difficult-to-clean type, the easy-to-clean type and the difficult-to-clean type correspond to a running speed. When it is determined that the material information is easy-to-clean type, control the robot to run at the first speed, and when it is determined that the material information is difficult-to-clean type, control the robot to run at the second speed. Wherein, the first speed is greater than the second speed, so that when the material information is the easy-to-clean type, the robot moves at a faster speed, and when the material information is the difficult-to-clean type, the robot moves at a slower speed to improve the cleaning efficiency of the robot.

Specifically, the first speed and the second speed are the running speeds preset in the robot. The easy-to-clean type includes marble and wooden floors, etc., and the difficult-to-clean type includes fiber materials, cotton and linen materials, etc.

In any one of the above-mentioned embodiments, furthermore, before the step of obtaining the material information of the working surface is implemented when the processor executes the computer program, it further implements: starting, a cleaning program; and controlling, the robot to run at a third speed, wherein, the third speed is greater than or equal to the target running speed.

In this embodiment, by turning on the cleaning program of the robot, the robot starts cleaning, turns on the detection function of the material of the working surface, and runs at the initial speed, which is the third speed, and then changes the moving speed according to the different materials detected. Wherein, the third speed is the moving speed preset in the robot, and the third speed is greater than or equal to the target running speed.

In any one of the above-mentioned embodiments, furthermore, when the processor executes the computer program, it further implements: receiving, a stopping cleaning instruction; and stopping obtaining the material information of the working surface, and closing the cleaning program.

In this embodiment, when the robot cleaning is completed or when a stop instruction is received, stop obtaining the material information of the working surface, and close the cleaning program.

Specifically, the robot is a sweeping robot. When the sweeping robot receives a start instruction and starts cleaning, it turns on the material detection function of the working surface and starts running at a constant speed. When it is detected that the ground is a material that is not easy to clean (carpet, etc.), the sweeping robot will automatically be set to low speed mode. When it detected that the ground is of other materials, the sweeping robot will automatically be set to normal mode; when the sweeping robot finishes cleaning or receives a stop command, the ground material detection function is turned off and the cleaning is stopped.

According to the second aspect of the present invention, a control method for robot is also provided, comprising: obtaining, material information of a working surface; and determining, a target running speed of the robot according to the material information, and control the robot to run at the target running speed.

The robot provided by the present invention can detect the material information of the working surface, and different materials will have different cleaning difficulties. For example, carpets are more difficult to clean than floors. If they move at the same speed when passing through the carpet and passing the floor, the carpet will not be cleaned properly. However, in the embodiment provided by the present invention, the robot controls the operating speed according to the material information of the working surface, that is, changes the moving speed of the robot according to the different materials, so that the robot can clean at different speeds for different materials when cleaning. If the detected material of the working surface is a material that is not easy to clean, you can set the speed to a low speed mode accordingly, and then when passing through the working surface that is not easy to clean, at the same cleaning frequency, that is, under the condition that the working frequency of the rolling brush remains unchanged, by slowing down the moving speed of the robot, you can clean the working surface that is not easy to clean at one time, thereby improving the cleaning effect of the robot. At the same time, compared with the related technology, in order to clean the carpet that is not easy to clean and let the robot clean the carpet multiple times, by slowly moving at a time to clean the carpet, it can reduce the possibility of collision between the robot and other movable objects, thereby improve the robot cleaning coverage, save user time and improve cleaning efficiency.

According to the above-mentioned robot provided by the present invention, it may also have the following additional technical features.

In the above-mentioned embodiments, furthermore, the step of determining the target running speed of the robot according to the material information specifically comprises: comparing, the material information with a stored material information; and determining, a running speed corresponding to the stored material information matching with the material information is the target running speed.

In this embodiment, the material information of a variety of working surfaces is stored in the robot in advance to form the stored material information, and the running speed corresponding to the stored material information is stored in the robot, that is, the optimal moving speed corresponding to different materials is stored in the robot in advance. After robot detects the material information of the working surface, it compares the detected material information with the stored material information, and uses the running speed corresponding to the stored material information that matches with the material information as the target running speed, and then achieve the technical effect of moving at different speeds according to different materials.

Furthermore, each material corresponds to a running speed.

In any one of the above-mentioned embodiments, furthermore, the step of determining the target running speed of the robot according to the material information specifically comprises: confirming, a corresponding material type according to the material information, and the material type comprises an easy-to-clean type and a difficult-to-clean type; determining, the material information is of the easy-to-clean type, and control the robot to run at a first speed; and determining, the material information is of the difficult-to-clean type, and control the robot to run at a second speed, wherein, the first speed is greater than the second speed.

In this embodiment, by storing the variety of materials in the robot in advance, and dividing the variety of material information into different material types according to the difficulty of cleaning, the material types include easy-to-clean type and difficult-to-clean type, the easy-to-clean type and the difficult-to-clean type correspond to a running speed. When it is determined that the material information is easy-to-clean type, control the robot to run at the first speed, and when it is determined that the material information is difficult-to-clean type, control the robot to run at the second speed. Wherein, the first speed is greater than the second speed, so that when the material information is the easy-to-clean type, the robot moves at a faster speed, and when the material information is the difficult-to-clean type, the robot moves at a slower speed to improve the cleaning efficiency of the robot.

Specifically, the first speed and the second speed are the running speeds preset in the robot. The easy-to-clean type includes marble and wooden floors, etc., and the difficult-to-clean type includes fiber materials, cotton and linen materials, etc.

In any one of the above-mentioned embodiments, furthermore, before the step of obtaining the material information of the working surface, it further comprises: starting, the cleaning program; and controlling, the robot to run at a third speed, wherein, the third speed is greater than or equal to the target running speed.

In this embodiment, by turning on the cleaning program of the robot, the robot starts cleaning, turns on the detection function of the material of the working surface, and runs at the initial speed, which is the third speed, and then changes the moving speed according to the different materials detected. Wherein, the third speed is the moving speed preset in the robot, and the third speed is greater than or equal to the target running speed.

In any one of the above-mentioned embodiments, furthermore, further comprising: receiving, a stopping cleaning instruction; and stopping obtaining the material information of the working surface, and closing the cleaning program.

In this embodiment, when the robot cleaning is completed or when a stop instruction is received, stop obtaining the material information of the working surface, and close the cleaning program.

Specifically, the robot is a sweeping robot. When the sweeping robot receives a start instruction and starts cleaning, it turns on the material detection function of the working surface and starts running at a constant speed. When it is detected that the ground is a material that is not easy to clean (carpet, etc.), the sweeping robot will automatically be set to low speed mode. When it detected that the ground is of other materials, the sweeping robot will automatically be set to normal mode; when the sweeping robot finishes cleaning or receives a stop command, the ground material detection function is turned off and the cleaning is stopped.

According to the second aspect of the present invention, A computer-readable storage medium is also provided, on which a computer program is stored, wherein when the computer program is executed by a processor, the steps of the method described in any one of the above-mentioned embodiments is implemented. Therefore, it has all the technical effects of the control method for robot, which will not be repeated here.

Additional aspects and advantages of the present invention will become apparent in the following description or will be learned by practice of the present invention.

### BRIEF DESCRIPTION OF THE DRAWINGS

The above and/or additional aspects and advantages of the present invention will become apparent and readily understood from the description of embodiments in conjunction with the following drawings:
Fig. 1 shows a schematic block diagram of a robot of an embodiment of the present invention;
Fig. 2 shows a schematic flow diagram of a control method for robot of an embodiment of the present invention;
Fig. 3 shows another schematic flow diagram of a control method for robot of an embodiment of the present invention;
Fig. 4 shows a schematic flow diagram of a control method for robot of an embodiment of the present invention;
Fig. 5 shows a schematic flow diagram of a control method for robot of a specific embodiment of the present invention.

### DETAILED DESCRIPTION OF THE invention

In order that the above-mentioned objectives, features and advantages of the present invention can be understood more clearly, a further detailed description of the present invention will be given below in connection with the accompanying drawings and specific embodiments. It should be noted that the embodiments of the present invention and the features in the embodiments can be combined with each other if there is no conflict.

In the following description, numerous specific details are set forth in order to provide a thorough understanding of the present invention. However, the present invention can also be implemented in other manners than those described herein. Therefore, the protection scope of the present invention is not limited to the specific embodiments disclosed below.

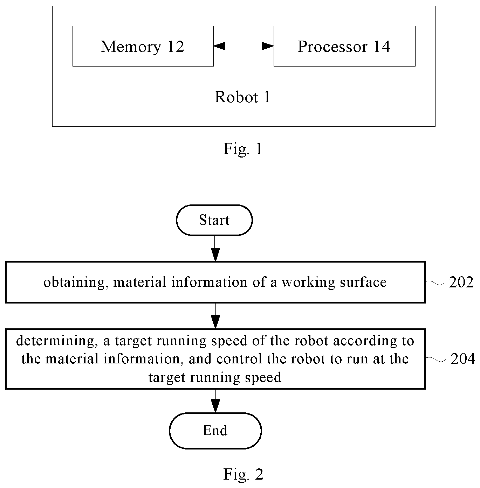

The following describes a robot 1, a control method for robot and a storage medium according to some embodiments of the present invention with reference to Figs. 1 to 5.

According to an embodiment of the first aspect of the present invention, the present invention provides a robot 1, including a memory 12, a processor 14 and a computer program stored on the memory 12 and running on the processor 14, and when the processor 14 executes the computer program, the following steps are implemented: obtaining, material information of a working surface; and determining, a target running speed of the robot 1 according to the material information, and control the robot 1 to run at the target running speed.

As shown in Fig. 1, the robot 1 provided by the present invention can detect the material information of the working surface, and different materials will have different cleaning difficulties. For example, carpets are more difficult to clean than floors. If they move at the same speed when passing through the carpet and passing the floor, the carpet will not be cleaned properly. However, in the embodiment provided by the present invention, the robot 1 controls the operating speed according to the material information of the working surface, that is, changes the moving speed of the robot 1 according to the different materials, so that the robot 1 can clean at different speeds for different materials when cleaning. If the detected material of the working surface is a material that is not easy to clean, you can set the speed to a low speed mode accordingly, and then when passing through the working surface that is not easy to clean, at the same cleaning frequency, that is, under the condition that the working frequency of the rolling brush remains unchanged, by slowing down the moving speed of the robot, you can clean the working surface that is not easy to clean at one time, thereby improving the cleaning effect of the robot. At the same time, compared with the related technology, in order to clean the carpet that is not easy to clean and let the robot 1 clean the carpet multiple times, by slowly moving at a time to clean the carpet, it can reduce the possibility of collision between the robot 1 and other movable objects, thereby improve the robot 1 cleaning coverage, save user time and improve cleaning efficiency.

In the above-mentioned embodiment, furthermore, the step of determining the target running speed of the robot 1 according to the material information is implemented when the processor 14 executes the computer program, specifically implements: comparing, the material information with a stored material information; and determining, a running speed corresponding to the stored material information matching with the material information is the target running speed.

In this embodiment, the material information of a variety of working surfaces is stored in the robot 1 in advance to form the stored material information, and the running speed corresponding to the stored material information is stored in the robot 1, that is, the optimal moving speed corresponding to different materials is stored in the robot 1 in advance. After robot 1 detects the material information of the working surface, it compares the detected material information with the stored material information, and uses the running speed corresponding to the stored material information that matches with the material information as the target running speed, and then achieve the technical effect of moving at different speeds according to different materials.

Furthermore, each material corresponds to a running speed.

In any one of the above-mentioned embodiments, furthermore, the step of determining the target running speed of the robot 1 according to the material information is implemented when the processor 14 executes the computer program, specifically implements: confirming, a corresponding material type according to the material information, and the material type comprises an easy-to-clean type and a difficult-to-clean type; determining, the material information is of the easy-to-clean type, and control the robot 1 to run at a first speed; and determining, the material information is of the difficult-to-clean type, and control the robot 1 to run at a second speed, wherein, the first speed is greater than the second speed.

In this embodiment, by storing the variety of materials in the robot 1 in advance, and dividing the variety of material information into different material types according to the difficulty of cleaning, the material types include easy-to-clean type and difficult-to-clean type, the easy-to-clean type and the difficult-to-clean type correspond to a running speed. When it is determined that the material information is easy-to-clean type, control the robot 1 to run at the first speed, and when it is determined that the material information is difficult-to-clean type, control the robot 1 to run at the second speed. Wherein, the first speed is greater than the second speed, so that when the material information is the easy-to-clean type, the robot 1 moves at a faster speed, and when the material information is the difficult-to-clean type, the robot 1 moves at a slower speed to improve the cleaning efficiency of the robot 1.

Specifically, the first speed and the second speed are the running speeds preset in the robot 1. The easy-to-clean type includes marble and wooden floors, etc., and the difficult-to-clean type includes fiber materials, cotton and linen materials, etc.

In any one of the above-mentioned embodiments, furthermore, before the step of obtaining the material information of the working surface is implemented when the processor 14 executes the computer program, it further implements: starting, the cleaning program; and controlling, the robot to run at a third speed, wherein the third speed is greater than or equal to the target running speed.

In this embodiment, by turning on the cleaning program of the robot 1, the robot 1 starts cleaning, turns on the detection function of the material of the working surface, and runs at the initial speed, which is the third speed, and then changes the moving speed according to the different materials detected. Wherein, the third speed is the moving speed preset in the robot 1, and the third speed is greater than or equal to the target running speed.

In any one of the above-mentioned embodiments, furthermore, when the processor 14 executes the computer program, it further implements: receiving, a stopping cleaning instruction; and stopping obtaining the material information of the working surface, and closing the cleaning program.

In this embodiment, when the robot 1 cleaning is completed or when a stop instruction is received, stop obtaining the material information of the working surface, and close the cleaning program.

Specifically, the robot 1 is a sweeping robot. When the sweeping robot receives a start instruction and starts cleaning, it turns on the material detection function of the working surface and starts running at a constant speed. When it is detected that the ground is a material that is not easy to clean (carpet, etc.), the sweeping robot will automatically be set to low speed mode. When it detected that the ground is of other materials, the sweeping robot will automatically be set to normal mode; when the sweeping robot finishes cleaning or receives a stop command, the ground material detection function is turned off and the cleaning is stopped.

According to the second aspect of the present invention, a control method for robot is also provided.

Fig. 2 shows a schematic flow diagram of a control method for robot of the present invention. As shown in Fig. 2, the method includes:
Step 202: obtaining, material information of a working surface;
Step 204: determining, a target running speed of the robot according to the material information, and control the robot to run at the target running speed.

The robot provided by the present invention can detect the material information of the working surface, and different materials will have different cleaning difficulties. For example, carpets are more difficult to clean than floors. If they move at the same speed when passing through the carpet and passing the floor, the carpet will not be cleaned properly. However, in the embodiment provided by the present invention, the robot controls the operating speed according to the material information of the working surface, that is, changes the moving speed of the robot according to the different materials, so that the robot can clean at different speeds for different materials when cleaning. If the detected material of the working surface is a material that is not easy to clean, you can set the speed to a low speed mode accordingly, and then when passing through the working surface that is not easy to clean, at the same cleaning frequency, that is, under the condition that the working frequency of the rolling brush remains unchanged, by slowing down the moving speed of the robot, you can clean the working surface that is not easy to clean at one time, thereby improving the cleaning effect of the robot. At the same time, compared with the related technology, in order to clean the carpet that is not easy to clean and let the robot clean the carpet multiple times, by slowly moving at a time to clean the carpet, it can reduce the possibility of collision between the robot and other movable objects, thereby improve the robot cleaning coverage, save user time and improve cleaning efficiency.

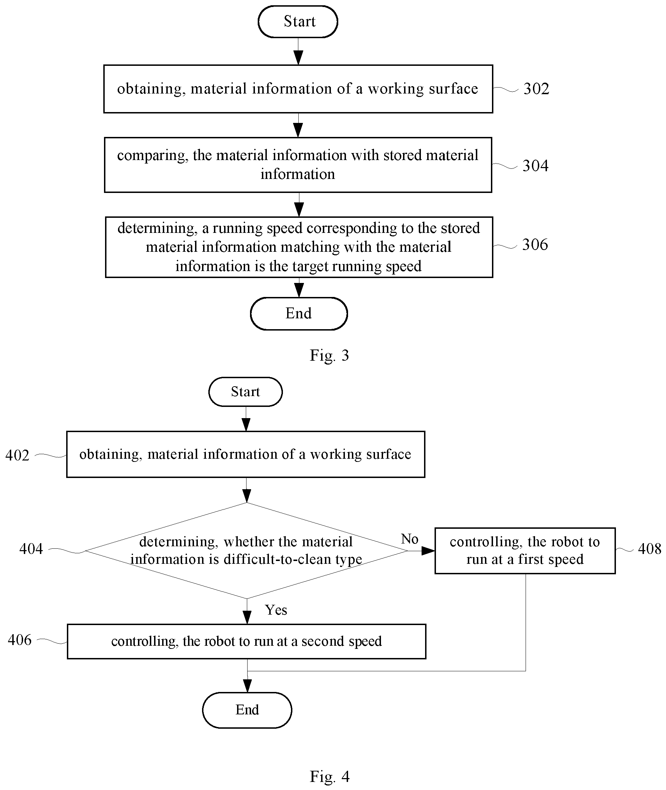

Fig. 3 shows another schematic flow diagram of a control method for robot of the present invention. As shown in Fig. 3, the method includes:
Step 302: obtaining, material information of a working surface;
Step 304: comparing, the material information with a stored material information;
Step 306: determining, a running speed corresponding to the stored material information matching with the material information is the target running speed.

In this embodiment, the material information of a variety of working surfaces is stored in the robot in advance to form the stored material information, and the running speed corresponding to the stored material information is stored in the robot, that is, the optimal moving speed corresponding to different materials is stored in the robot in advance. After robot detects the material information of the working surface, it compares the detected material information with the stored material information, and uses the running speed corresponding to the stored material information that matches with the material information as the target running speed, and then achieve the technical effect of moving at different speeds according to different materials.

Furthermore, each material corresponds to a running speed.

Fig. 4 shows further another schematic flow diagram of a control method for robot of the present invention. As shown in Fig. 4, the method includes:
Step 402: obtaining, material information of a working surface;
Step 404: determining, whether the material information is difficult-to-clean type; if it is, skip to step 406, if not, skip to step 408;
Step 406: controlling, the robot 1 to run at a second speed;
Step 408: controlling, the robot 1 to run at a first speed.

In this embodiment, by storing the variety of materials in the robot in advance, and dividing the variety of material information into different material types according to the difficulty of cleaning, the material types include easy-to-clean type and difficult-to-clean type, the easy-to-clean type and the difficult-to-clean type correspond to a running speed. When it is determined that the material information is easy-to-clean type, control the robot to run at the first speed, and when it is determined that the material information is difficult-to-clean type, control the robot to run at the second speed. Wherein, the first speed is greater than the second speed, so that when the material information is the easy-to-clean type, the robot moves at a faster speed, and when the material information is the difficult-to-clean type, the robot moves at a slower speed to improve the cleaning efficiency of the robot.

Specifically, the first speed and the second speed are the running speeds preset in the robot. The easy-to-clean type includes marble and wooden floors, etc., and the difficult-to-clean type includes fiber materials, cotton and linen materials, etc.

In any one of the above-mentioned embodiments, furthermore, before step 202, it further comprises: starting, the cleaning program; and controlling, the robot to run at a third speed, wherein, the third speed is greater than or equal to the target running speed.

In this embodiment, by turning on the cleaning program of the robot, the robot starts cleaning, turns on the detection function of the material of the working surface, and runs at the initial speed, which is the third speed, and then changes the moving speed according to the different materials detected. Wherein, the third speed is the moving speed preset in the robot, and the third speed is greater than or equal to the target running speed.

In any one of the above-mentioned embodiments, furthermore, further comprising: receiving, a stopping cleaning instruction; and stopping obtaining the material information of the working surface, and closing the cleaning program.

In this embodiment, when the robot cleaning is completed or when a stop instruction is received, stop obtaining the material information of the working surface, and close the cleaning program.

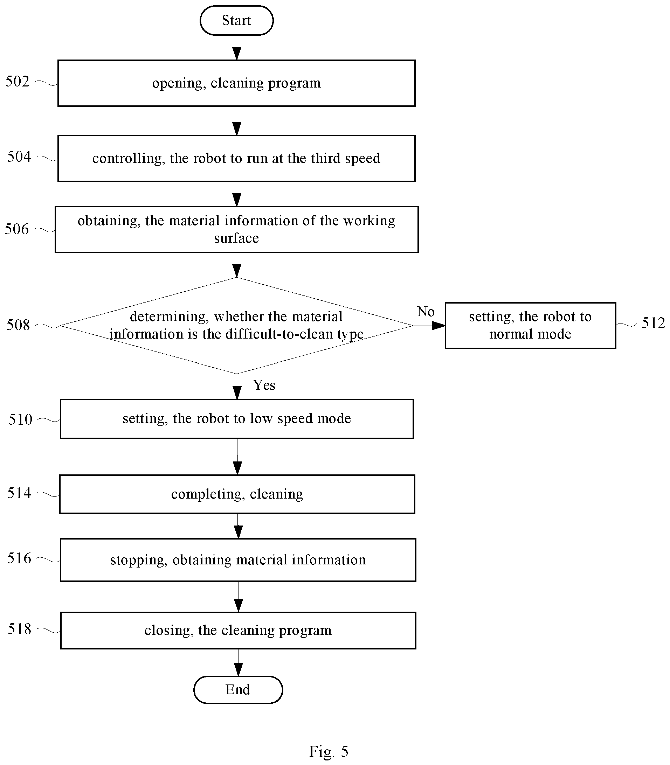

Fig. 5 shows further a schematic flow diagram of a control method for robot of a specific embodiment of the present invention. As shown in Fig. 5, the method includes:
Step 502: opening, cleaning program;
Step 504: controlling, the robot to run at the third speed;
Step 506: obtaining, the material information of the working surface;
Step 508: determining, whether the material information is the difficult-to-clean type; if it is, skip to step 510, if not, skip to step 512;
Step 510: setting, the robot to low speed mode;
Step 512: setting, the robot to normal mode;
Step 514: completing, cleaning;
Step 516: stopping obtaining material information;
Step 518: closing, the cleaning program.

In this embodiment, specifically, the robot is a sweeping robot. When the sweeping robot receives a start instruction and starts cleaning, it turns on the material detection function of the working surface and starts running at a constant speed. When it is detected that the ground is a material that is not easy to clean (carpet, etc.), the sweeping robot will automatically be set to low speed mode. When it detected that the ground is of other materials, the sweeping robot will automatically be set to normal mode; when the sweeping robot finishes cleaning or receives a stop command, the ground material detection function is turned off and the cleaning is stopped.

According to the second aspect of the present invention, A computer-readable storage medium is also provided, on which a computer program is stored, wherein when the computer program is executed by a processor, the steps of the method described in any one of the above-mentioned embodiments is implemented. Therefore, it has all the technical effects of the control method for robot, which will not be repeated here.

In the present invention, "a plurality of" means two or more, unless otherwise explicitly defined. The terms "installing", "connected", "connection", "fixing" and the like should be understood in a broad sense, for example, "connection" may be a fixed connection, a removable connection or an integral connection; and "connected" may refer to direct connection or indirect connection through an intermediary. A person of ordinary skills in the art could understand the specific meaning of the terms in the present invention according to specific situations.

**In** the description of the present invention, the descriptions of the terms "one embodiment", "some embodiments" and "specific embodiments" and the like mean that specific features, structures, materials or characteristics described in conjunction with the embodiment(s) or example(s) are included in at least one embodiment or example of the present invention. In the specification, the schematic representation of the above terms does not necessarily refer to the same embodiment or example. Moreover, the specific features, structures, materials or characteristics described may be combined in a suitable manner in any one or more embodiments or examples.

The descriptions above are only preferred embodiments of the present invention, which are not used to limit the present invention.

## Claims

1. A robot (1), comprising a memory (12), a processor (14) and a computer program stored on the memory (12) and able to be run on the processor (14), when the processor (14) executes the computer program, implementing:
(S202, S302, S402) obtaining, a material information of a working surface; and
S204 determining, a target running speed of the robot (1) according to the material information, and control the robot (1) to run at the target running speed,
**characterized in that**
before the step of (S202, S302, S402) obtaining the material information of the working surface is implemented when the processor (14) executes the computer program, it further implements:
(S502) starting, a cleaning program; and
(S504) controlling, the robot (1) to run at a third speed,
wherein, the third speed is greater than or equal to the target running speed.

2. The robot (1) according to claim 1, wherein
the step of (S204) determining the target running speed of the robot (1) according to the material information which is implemented when the processor (14) executes the computer program, specifically implements:
(S304) comparing, the material information with a stored material information; and
(S306) determining, a running speed corresponding to a stored material information matching with the material information is the target running speed.

3. The robot (1) according to claim 1 or 2, wherein
the step of (S204) determining the target running speed of the robot (1) according to the material information which is implemented when the processor (14) executes the computer program, specifically implements:
confirming, a corresponding material type according to the material information, wherein the material type comprises an easy-to-clean type and a difficult-to-clean type;
determining, the material information is of the easy-to-clean type, and (S408) control the robot (1) to run at a first speed; and
determining, the material information is of the difficult-to-clean type, and (S406) control the robot (1) to run at a second speed,
wherein, the first speed is greater than the second speed.

4. The robot (1) according to any one of claims 1 to 3, wherein,
when the processor (14) executes the computer program, it further implements:
receiving, a stopping cleaning instruction; and
(S516) stopping obtaining the material information of the working surface, and (S518) closing the cleaning program.

5. A control method for robot (1), comprising:
(S202, S302, S402) obtaining, a material information of a working surface; and
(S204) determining, a target running speed of the robot (1) according to the material information, and control the robot (1) to run at the target running speed,
**characterized in that** the method further comprises
before the step of (S202, S302, S402) obtaining the material information of the working surface, it further comprises:
(S502) starting, a cleaning program; and
(S504) controlling, the robot (1) to run at a third speed,
wherein the third speed is greater than or equal to the target running speed.

6. The control method for robot (1) according to claim 5, wherein
The step of (S204) determining the target running speed of the robot (1) according to the material information specifically comprises:
(S304) comparing, the material information with a stored material information; and
(S306) determining, a running speed corresponding to the stored material information matching with the material information is the target running speed.

7. The control method for robot (1) according to claim 5 or 6, wherein
the step of (S204) determining the target running speed of the robot (1) according to the material information specifically comprises:
confirming, a corresponding material type according to the material information, wherein the material type comprises an easy-to-clean type and a difficult-to-clean type;
determining, the material information is of the easy-to-clean type, and (S408) control the robot (1) to run at a first speed; and
(S404) determining, the material information is of the difficult-to-clean type, and (S406) control the robot (1) to run at a second speed,
wherein the first speed is greater than the second speed.

8. The control method for robot (1) according to any one of claims 5 to 7, further comprising:
receiving, a stopping cleaning instruction; and
(S516) stopping obtaining the material information of the working surface, and (S518) closing the cleaning program.

9. A computer-readable storage medium on which a computer program is stored, wherein when the computer program is executed by a processor (14), a control method for robot (1) according to any one of claims 5 to 8 is implemented.

## Patentansprüche

1. Roboter (1), umfassend einen Speicher (12), einen Prozessor (14) und ein Computerprogramm, das in dem Speicher (12) gespeichert ist und auf dem Prozessor (14) laufen kann, wenn der Prozessor (14) das Computerprogramm ausführt, wobei es Folgendes implementiert:
(S202, S302, S402) Erhalten einer Materialinformation einer Arbeitsfläche; und
S204 Bestimmen einer Ziellaufgeschwindigkeit des Roboters (1) gemäß der Materialinformation und Steuern des Roboters (1), so dass er mit der Ziellaufgeschwindigkeit läuft,
**dadurch gekennzeichnet, dass**
bevor der Schritt (S202, S302, S402) des Erhaltens der Materialinformation der Arbeitsfläche implementiert wird, wenn der Prozessor (14) das Computerprogramm ausführt, es ferner Folgendes implementiert:
(S502) Starten eines Reinigungsprogramms; und
(S504) Steuern des Roboters (1), so dass er mit einer dritten Geschwindigkeit läuft,
wobei die dritte Geschwindigkeit größer oder gleich der Ziellaufgeschwindigkeit ist.

2. Roboter (1) gemäß Anspruch 1, wobei
der Schritt (S204) des Bestimmens der Ziellaufgeschwindigkeit des Roboters (1) gemäß der Materialinformation, der implementiert wird, wenn der Prozessor (14) das Computerprogramm ausführt, insbesondere Folgendes implementiert:
(S304) Vergleichen der Materialinformation mit einer gespeicherten Materialinformation; und
(S306) Bestimmen, dass eine Laufgeschwindigkeit, die einer gespeicherten Materialinformation entspricht, die mit der Materialinformation übereinstimmt, die Ziellaufgeschwindigkeit ist.

3. Roboter (1) gemäß Anspruch 1 oder 2, wobei
der Schritt (S204) des Bestimmens der Ziellaufgeschwindigkeit des Roboters (1) gemäß der Materialinformation, der implementiert wird, wenn der Prozessor (14) das Computerprogramm ausführt, insbesondere Folgendes implementiert:
Bestätigen eines entsprechenden Materialtyps gemäß der Materialinformation, wobei der Materialtyp einen leicht zu reinigenden Typ und einen schwer zu reinigenden Typ umfasst;
Bestimmen, dass die Materialinformation vom leicht zu reinigenden Typ ist, und (S408) Steuern des Roboters (1), so dass er mit einer ersten Geschwindigkeit läuft; und
Bestimmen, dass die Materialinformation vom schwer zu reinigenden Typ ist, und (S406) Steuern des Roboters (1), so dass er mit einer zweiten Geschwindigkeit läuft,
wobei die erste Geschwindigkeit größer als die zweite Geschwindigkeit ist.

4. Roboter (1) gemäß einem der Ansprüche 1 bis 3, wobei,
wenn der Prozessor (14) das Computerprogramm ausführt, es ferner Folgendes implementiert:
Empfangen einer Anweisung zum Beenden der Reinigung; und
(S516) Beenden des Erhaltens der Materialinformation der Arbeitsfläche und (S518) Schließen des Reinigungsprogramms.

5. Steuerverfahren für einen Roboter (1), umfassend:
(S202, S302, S402) Erhalten einer Materialinformation einer Arbeitsfläche; und
(S204) Bestimmen einer Ziellaufgeschwindigkeit des Roboters (1) gemäß der Materialinformation und Steuern des Roboters (1), so dass er mit der Ziellaufgeschwindigkeit läuft,
**dadurch gekennzeichnet, dass** das Verfahren ferner Folgendes umfasst
vor dem Schritt (S202, S302, S402) des Erhaltens der Materialinformation der Arbeitsfläche, umfasst es ferner:
(S502) Starten eines Reinigungsprogramms; und
(S504) Steuern des Roboters (1), so dass er mit einer dritten Geschwindigkeit läuft,
wobei die dritte Geschwindigkeit größer oder gleich der Ziellaufgeschwindigkeit ist.

6. Steuerverfahren für einen Roboter (1) gemäß Anspruch 5, wobei der Schritt (S204) des Bestimmens der Ziellaufgeschwindigkeit des Roboters (1) gemäß der Materialinformation insbesondere Folgendes umfasst:
(S304) Vergleichen der Materialinformation mit einer gespeicherten Materialinformation; und
(S306) Bestimmen, dass eine Laufgeschwindigkeit, die der gespeicherten Materialinformation entspricht, die mit der Materialinformation übereinstimmt, die Ziellaufgeschwindigkeit ist.

7. Steuerverfahren für einen Roboter (1) gemäß Anspruch 5 oder 6, wobei der Schritt des (S204) Bestimmens der Ziellaufgeschwindigkeit des Roboters (1) gemäß der Materialinformation insbesondere Folgendes umfasst:
Bestätigen eines entsprechenden Materialtyps gemäß der Materialinformation, wobei der Materialtyp einen leicht zu reinigenden Typ und einen schwer zu reinigenden Typ umfasst;
Bestimmen, dass die Materialinformation vom leicht zu reinigenden Typ ist, und (S408) Steuern des Roboters (1), so dass er mit einer ersten Geschwindigkeit läuft; und
(S404) Bestimmen, dass die Materialinformation vom schwer zu reinigenden Typ ist, und (S406) Steuern des Roboters (1), so dass er mit einer zweiten Geschwindigkeit läuft,
wobei die erste Geschwindigkeit größer als die zweite Geschwindigkeit ist.

8. Steuerverfahren für einen Roboter (1) gemäß einem der Ansprüche 5 bis 7, ferner umfassend:
Empfangen einer Anweisung zum Beenden der Reinigung; und
(S516) Beenden des Erhaltens der Materialinformation der Arbeitsfläche und (S518) Schließen des Reinigungsprogramms.

9. Computerlesbares Speichermedium, auf dem ein Computerprogramm gespeichert ist, wobei, wenn das Computerprogramm von einem Prozessor (14) ausgeführt wird, ein Steuerverfahren für einen Roboter (1) gemäß einem der Ansprüche 5 bis 8 implementiert wird.

## Revendications

1. Robot (1) comprenant une mémoire (12), un processeur (14) et un programme informatique stocké sur la mémoire (12) et en mesure d'être exécuté sur le processeur (14) lorsque le processeur (14) exécute le programme informatique, mettant en œuvre :
(E202, E302, E402) l'obtention d'informations de matériau d'une surface de travail ; et
(E204) la détermination d'une vitesse de déplacement cible du robot (1) selon les informations de matériau, et la commande du robot (1) pour qu'il se déplace à la vitesse de déplacement cible,
**caractérisé en ce que**
avant que l'étape (E202, E302, E402) d'obtention des informations de matériau de la surface de travail ne soit mise en œuvre lorsque le processeur (14) exécute le programme informatique, il met en œuvre en outre :
(E502) le démarrage d'un programme de nettoyage ; et
(E504) la commande du robot (1) pour qu'il se déplace à une troisième vitesse,
dans lequel la troisième vitesse est supérieure ou égale à la vitesse de déplacement cible.

2. Robot (1) selon la revendication 1, dans lequel
l'étape de (E204) détermination de la vitesse de déplacement cible du robot (1) selon les informations de matériau qui est mise en œuvre lorsque le processeur (14) exécute le programme informatique met en œuvre de manière spécifique :
(E304) la comparaison des informations de matériau à des informations de matériau stockées ; et
(E306) la détermination qu'une vitesse de déplacement correspondant à des informations de matériau stockées coïncidant avec les informations de matériau est la vitesse de déplacement cible.

3. Robot (1) selon la revendication 1 ou 2, dans lequel
l'étape de (E204) la détermination de la vitesse de déplacement cible du robot (1) selon les informations de matériau qui est mise en œuvre lorsque le processeur (14) exécute le programme informatique met en œuvre de manière spécifique:
la confirmation d'un type de matériau correspondant selon les informations de matériau, dans lequel le type de matériau comprend un type facile à nettoyer et un type difficile à nettoyer ;
la détermination que les informations de matériau sont du type facile à nettoyer, et (E408) la commande du robot (1) pour qu'il se déplace à une première vitesse ; et
la détermination que les informations de matériau sont du type difficile à nettoyer, et (E406) la commande du robot (1) pour qu'il se déplace à une deuxième vitesse,
dans lequel la première vitesse est supérieure à la deuxième vitesse.

4. Robot (1) selon l'une quelconque des revendications 1 à 3, dans lequel lorsque le processeur (14) exécute le programme informatique, il met en œuvre en outre :
la réception d'une instruction d'arrêt nettoyage ; et
(E516) l'arrêt de l'obtention des informations de matériau de la surface de travail, et
(E518) la fermeture du programme de nettoyage.

5. Procédé de commande pour le robot (1) comprenant :
(E202, E302, E402) l'obtention d'informations de matériau d'une surface de travail ; et
(E204) la détermination d'une vitesse de déplacement cible du robot (1) selon les informations de matériau, et la commande du robot (1) pour qu'il se déplace à la vitesse de déplacement cible,
**caractérisé en ce que** le procédé comprend en outre
avant l'étape de (E202, E302, E402) l'obtention des informations de matériau de la surface de travail :
(E502) le démarrage d'un programme de nettoyage ; et
(E504) la commande du robot (1) pour qu'il se déplace à une troisième vitesse,
dans lequel la troisième vitesse est supérieure ou égale à la vitesse de déplacement cible.

6. Procédé de commande pour le robot (1) selon la revendication 5, dans lequel l'étape de (E204) détermination de la vitesse de déplacement cible du robot (1) en fonction des informations de matériau comprend de manière spécifique :
(E304) la comparaison des informations de matériau à des informations de matériau mémorisées ; et
(E306) la détermination qu'une vitesse de déplacement correspondant aux informations de matériau stockées coïncidant avec les informations de matériau est la vitesse de déplacement cible.

7. Procédé de commande pour le robot (1) selon la revendication 5 ou 6, dans lequel l'étape de (E204) la détermination de la vitesse de déplacement cible du robot (1) selon les informations de matériau comprend de manière spécifique :
la confirmation d'un type de matériau correspondant selon les informations de matériau, dans lequel le type de matériau comprend un type facile à nettoyer et un type difficile à nettoyer ;
la détermination que les informations de matériau sont du type facile à nettoyer, et (E408) la commande du robot (1) pour qu'il se déplace à une première vitesse ; et
(E404) la détermination que les informations de matériau sont du type difficile à nettoyer, et (E406) la commande du robot (1) pour qu'il se déplace à une deuxième vitesse,
dans lequel la première vitesse est supérieure à la deuxième vitesse.

8. Procédé de commande pour le robot (1) selon l'une quelconque des revendications 5 à 7, comprenant en outre :
la réception d'une instruction d'arrêt de nettoyage ; et
(E516) l'arrêt de l'obtention des informations de matériau de la surface de travail, et
(E518) la fermeture du programme de nettoyage.

9. Support de stockage lisible par ordinateur sur lequel un programme informatique est stocké, dans lequel lorsque le programme informatique est exécuté par un processeur (14), un procédé de commande pour le robot (1) selon l'une quelconque des revendications 5 à 8 est mis en œuvre.
